# EUROPEAN PATENT SPECIFICATION

(11) **EP 3 086 600 B1**
(45) Date of publication and mention of the grant of the patent: **04.10.2017**
(21) Application number: 14879699.8
(22) Date of filing: 06.06.2014
(51) Int. Cl.: H04W 36/00, H04W 36/14

(54) **METHOD AND DEVICE FOR REDIRECTING BETWEEN FDD AND TDD OF LTE SYSTEM**
VERFAHREN UND VORRICHTUNG ZUR WEITERLEITUNG ZWISCHEN FDD UND TDD EINES LTE-SYSTEMS
PROCÉDÉ ET DISPOSITIF DE REDIRECTION ENTRE LE DUPLEXAGE PAR RÉPARTITION EN FRÉQUENCE, FDD, ET LE DUPLEXAGE PAR RÉPARTITION DANS LE TEMPS, TDD, D'UN SYSTÈME À ÉVOLUTION À LONG TERME, LTE

(30) Priority: 22.01.2014 CN 201410028842
(43) Date of publication of application: 26.10.2016
(73) Proprietor: ZTE Corporation, Shenzhen, Guangdong 518057 (CN)
(72) Inventor: WEI, Peng, Shenzhen Guangdong 518057 (CN); SUN, Xiaoyu, Shenzhen Guangdong 518057 (CN)
(74) Representative: Awapatent AB
(86) International application number: PCT/CN2014/079334
(87) International publication number: WO 2015/109724

(56) References cited:
- CN-A- 101 523 953
- CN-A- 101 686 519
- CN-A- 102 421 159
- US-A1- 2008 320 149
- US-A1- 2012 269 167
- US-A1- 2013 322 302

## Description

### Technical Field

The present invention relates to the technical field of redirecting between Frequency Division Duplexing (FDD) and Time Division Duplexing (TDD) of a Long Term Evolution (LTE) system, and specifically, to a method and device for redirecting between the FDD and the TDD of the LTE system.

### Background of the Related Art

The LTE system has two modes: FDD-LTE and TDD-LTE, namely a frequency division duplexing LTE system and a time division duplexing LTE system. The main distinction between the technologies of the frequency division duplexing LTE system and the time division duplexing LTE system is the physical layer (like a frame structure, a time division design and synchronization and so on) of the air interface. Data are received and sent by using one pair of symmetrical frequency bands in uplink and downlink transmission of the air interface of the FDD-LTE system, but transmission is performed in different time slots with the same frequency band in the uplink and downlink of the TDD-LTE system. Compared to the FDD duplexing mode, the TDD has higher spectral efficiency.

With the continuous development and commercialization of the 4G technology, as well as China's strong popularization of the TDD technology, 4G networks of numerous operators will be networks covered by both the FDD mode and the TDD mode, which relates to the scenario of performing handover from the FDD mode to the TDD mode or performing handover from the TDD mode to the FDD mode when a terminal supporting the FDD mode and the TDD mode performs data services. Herein one important handover technology is redirection, since the 3GPP does not define how the terminal to implement the redirection between FDD and TDD of the LTE, a plurality of terminal chip and platform manufacturers such as Qualcomm implement the redirection by using the detach-attach scheme. For example, when it is to redirect from the FDD mode to the TDD mode, the terminal firstly initiates a detach request in the FDD mode, and then initiates an attach request in the TDD mode again. Since the core network will delete the session after receiving the detach request, it will cause that services of the terminal user are interrupted, which seriously affects the user experience.

The document US 2012/02691167 A1 discloses a method wherein a mobility management entity MME recovers a session upon reattachment of a user equipment UE.

The document US 2008/0320149 A1 discloses a method wherein a session is maintained in a mobility management entity MME when a terminal switches to another access network.

The disclosure of document US 2013/0322302 A1 relates to the redirection between FDD mode and TDD mode in an LTE system.

### Summary of the Invention

The technical problem required to be solved in the embodiments of the present invention is to provide a method and device for redirecting between FDD and TDD of an LTE system, which solves the problem of service interruption caused by detach when a data terminal redirects from the FDD to the TDD or redirects from the TDD to the FDD in a network covered by both the FDD and the TDD of the LTE system.

In order to solve the above technical problem, the following technical scheme is adopted.

A method for redirecting between FDD and TDD of an LTE system includes:
a mobility management entity MME receiving a detach request message sent by a terminal in a first system mode, and if judging that the detach request message is used for redirecting between FDD and TDD, setting a session maintenance identifier as valid for a current session of the terminal, and maintaining the current session;
the MME receiving an attach request message sent by the terminal in a second system mode, according to a unique identifier of the terminal, querying whether a session maintenance identifier of a session corresponding to the unique identifier is valid, and if the session maintenance identifier is valid, recovering the session;
herein, the first system mode is a frequency division duplexing-long term evolution (FDD-LTE) mode, and the second system mode is a time division duplexing-long term evolution (TDD-LTE) mode; or, the first system mode is a TDD-LTE mode, and the second system mode is an FDD-LTE mode.
In one embodiment, the detach request message carries an identifier used for representing redirecting between the FDD and the TDD;
the MME judges that the detach request message is used for redirecting between the FDD and the TDD according to the identifier used for representing redirecting between the FDD and the TDD. In another embodiment, the step of the MME maintaining the current session includes: establishing and saving a session copy of the current session and a unique identifier copy of the terminal. In this embodiment, the step of, according to a unique identifier of the terminal, querying whether a session maintenance identifier of a session corresponding to the unique identifier is valid includes: judging whether the unique identifier of the terminal is identical with a saved unique identifier copy, if the unique identifier of the terminal is identical with the saved unique identifier copy, querying whether the session maintenance identifier of the session corresponding to the unique identifier of the terminal is valid. In another embodiment, the method further includes:
after recovering the session, setting the session maintenance identifier of the session as invalid, and releasing the unique identifier copy of the terminal and a session copy of the session corresponding to the unique identifier.

A device for redirecting between FDD and TDD of an LTE system includes a receiving module, a session maintenance module and a session recovery module, herein:
the receiving module is configured to: receive a detach request message sent by a terminal in a first system mode, and send the detach request message to the session maintenance module, and receive an attach request message sent by the terminal in a second system mode, and send the attach request message to the session recovery module;
the session maintenance module is configured to: after receiving the detach request message, if judging that the detach request message is used for redirecting between FDD and TDD, set a session maintenance identifier as valid for a current session of the terminal, and maintain the current session;
the session recovery module is configured to: after receiving the attach request message, according to a unique identifier of the terminal, query whether a session maintenance identifier of a session corresponding to the unique identifier is valid, and if the session maintenance identifier is valid, recover the session;
herein, the first system mode is a frequency division duplexing-long term evolution (FDD-LTE) mode, and the second system mode is a time division duplexing-long term evolution (TDD-LTE) mode; or, the first system mode is a TDD-LTE mode, and the second system mode is an FDD-LTE mode.
In one embodiment, the detach request message carries an identifier used for representing redirecting between the FDD and the TDD;
the session maintenance module is further configured to: judge that the detach request message is used for redirecting between the FDD and the TDD according to the identifier used for representing redirecting between the FDD and the TDD. In another embodiment, the session maintenance module is configured to maintain the current session by means of:
establishing and saving a session copy of the current session and a unique identifier copy of the terminal.
In this embodiment, the session recovery module is configured to, according to the unique identifier of the terminal, query whether the session maintenance identifier of the session corresponding to the unique identifier is valid by means of:
judging whether the unique identifier of the terminal is identical with a saved unique identifier copy, if the unique identifier of the terminal is identical with the saved unique identifier copy, querying whether the session maintenance identifier of the session corresponding to the unique identifier of the terminal is valid.
In another embodiment, the session recovery module is further configured to: after recovering the session, set the session maintenance identifier of the session as invalid, and release the unique identifier copy of the terminal and a session copy of the session corresponding to the unique identifier.

Compared with the related art, through the method and device for redirecting between FDD and TDD of the LTE system provided in the embodiments of the present invention, the problem of service interruption caused by detach when the data terminal redirects from the FDD to the TDD or redirects from the TDD to the FDD in the network covered by both the FDD and the TDD of the LTE system is solved.

### Brief Description of Drawings

FIG. 1 is a flow chart of a method for redirecting between FDD and TDD of an LTE system in the embodiment;
FIG. 2 is a structure chart of the Detach request message in the embodiment;
FIG. 3 is a structure chart of a device for redirecting between FDD and TDD of an LTE system in the embodiment;
FIG. 4 is a flow chart of a method for redirecting between FDD and TDD in the embodiment.

### Preferred Embodiments of the Invention

The embodiments of the present invention will be described in detail in combination with the accompanying drawings below.

### Embodiments:

The embodiments of the present invention relate to the handover technology of the data terminal between FDD and TDD in an Evolved Packet System (EPS). The data terminals include wireless terminal products such as a mobile phone supporting the LTE, a mobile hotspot product and a data card and so on (hereinafter called terminals). The handover technology mainly refers to redirecting from the FDD to the TDD or redirecting from the TDD to the FDD.

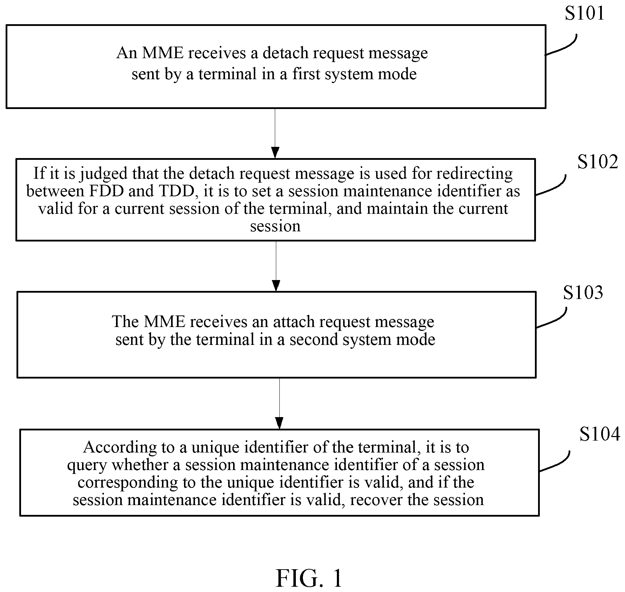

As shown in FIG. 1, the embodiment provides a method for redirecting between FDD and TDD of an LTE system, and the following steps are included:
in step S101, an MME receives a detach request message sent by a terminal in a first system mode;
herein, the detach request message carries an identifier used for redirecting between the FDD and the TDD of the detach request message; after receiving the detach request message, the MME may judge that the detach type is a detach type caused by redirecting between the FDD and the TDD of the LTE according to the identifier carried in the detach request message, that is, the detach request message is used for redirecting between the FDD and the TDD.

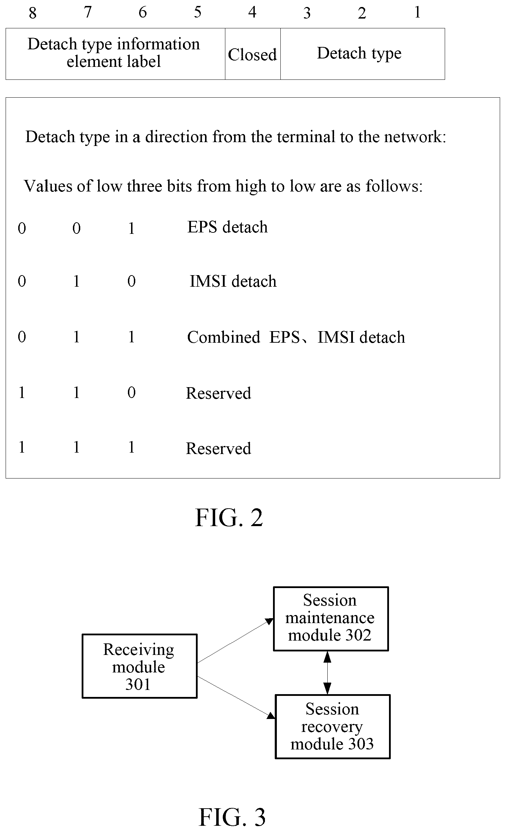

As shown in FIG. 2, the length of the Detach request message is 8bit, and the low 3bit of the detach request message represents the detach type, herein 001 represents EPS detach, 010 represents IMSI detach, 011 represents combined EPS/IMSI detach, and 110 and 111 are reserved bits, the low 3bit of the detach request message can be 110 or 111 in the embodiment, to represent that the detach request message is the detach type caused by redirecting between the FDD and the TDD of the LTE system.

In step S102, if it is judged that the detach request message is used for redirecting between FDD and TDD, it is to set a session maintenance identifier as valid for a current session of the terminal, and the current session is maintained;
herein, the MME maintaining the current session includes: establishing a session copy of the current session and a unique identifier copy of the terminal. The unique identifier of the terminal includes: an International Mobile Subscriber Identification Number (IMSI) or a Globally Unique Temporary Identifier (GUTI).

In step S103, the MME receives an attach request message sent by the terminal in a second system mode;
herein, the first system mode is a frequency division duplexing-long term evolution (FDD-LTE) mode, and the second system mode is a time division duplexing-long term evolution (TDD-LTE) mode; or, the first system mode is a TDD-LTE mode, and the second system mode is an FDD-LTE mode.

In step S104, according to the unique identifier of the terminal, it is to query whether a session maintenance identifier of a session corresponding to the unique identifier is valid, and if the session maintenance identifier is valid, the session is recovered.

Herein, according to the unique identifier of the terminal, the step of querying whether the session maintenance identifier of the session corresponding to the unique identifier is valid includes: judging whether the unique identifier of the terminal is identical with the saved unique identifier copy, and querying whether the session maintenance identifier of the session corresponding to the unique identifier of the terminal is valid if the unique identifier of the terminal is identical with the saved unique identifier copy.

Herein, if the unique identifier of the terminal is identical with the saved unique identifier copy and the session maintenance identifier of the session corresponding to the unique identifier of the terminal is valid, it indicates that the session is the session maintained in the step S102, and the session is recovered, which can guarantee that no session interruption occurs in the redirection process of the terminal performing handover from the FDD to the TDD or performing handover from the TDD to the FDD.

In addition, after the session is recovered, the method also includes: setting the session maintenance identifier of the session as invalid, and releasing the unique identifier copy of the terminal and the session copy of the corresponding session.

As shown in FIG. 3, the embodiment provides a device for redirecting between FDD and TDD of an LTE system, which includes a receiving module 301, a session maintenance module 302 and a session recovery module 303, herein:
the receiving module 301 is configured to: receive a detach request message sent by a terminal in a first system mode, and send the detach request message to the session maintenance module, and receive an attach request message sent by the terminal in a second system mode, and send the attach request message to the session recovery module;
the session maintenance module 302 is configured to: after receiving the detach request message, if judging that the detach request message is used for redirecting between frequency division duplexing FDD and time division duplexing TDD, set a session maintenance identifier as valid for a current session of the terminal, and maintain the current session;
herein, the detach request message carries an identifier used for representing redirecting between the FDD and the TDD;
the session maintenance module 302 is configured to: judge that the detach request message is used for redirecting between the FDD and the TDD according to the identifier used for representing redirecting between the FDD and the TDD.

As an alternative way, as shown in FIG. 2, in the embodiment, the identifier used for representing redirecting between the FDD and the TDD includes: the low 3bit of the detach request message being 110 or 111.

Herein, the session maintenance module 302 is configured to maintain the current session by means of:
establishing a session copy of the current session and a unique identifier copy of the terminal.

The session recovery module 303 is configured to: after receiving the attach request message, according to a unique identifier of the terminal, query whether a session maintenance identifier of a session corresponding to the unique identifier is valid, and if the session maintenance identifier is valid, recover the session;
herein, the session recovery module 303 being configured to, according to the unique identifier of the terminal, query whether the session maintenance identifier of the session corresponding to the unique identifier is valid includes:
judging whether the unique identifier of the terminal is identical with the saved unique identifier copy, if the unique identifier of the terminal is identical with the saved unique identifier copy, querying whether the session maintenance identifier of the session corresponding to the unique identifier of the terminal is valid.

Moreover, the session recovery module 303 is further configured to: after recovering the session, set the session maintenance identifier of the session as invalid, and release the unique identifier copy of the terminal and the session copy of the corresponding session.

Herein, the first system mode is an FDD-LTE mode, and the second system mode is a TDD-LTE mode; or, the first system mode is a TDD-LTE mode, and the second system mode is an FDD-LTE mode.

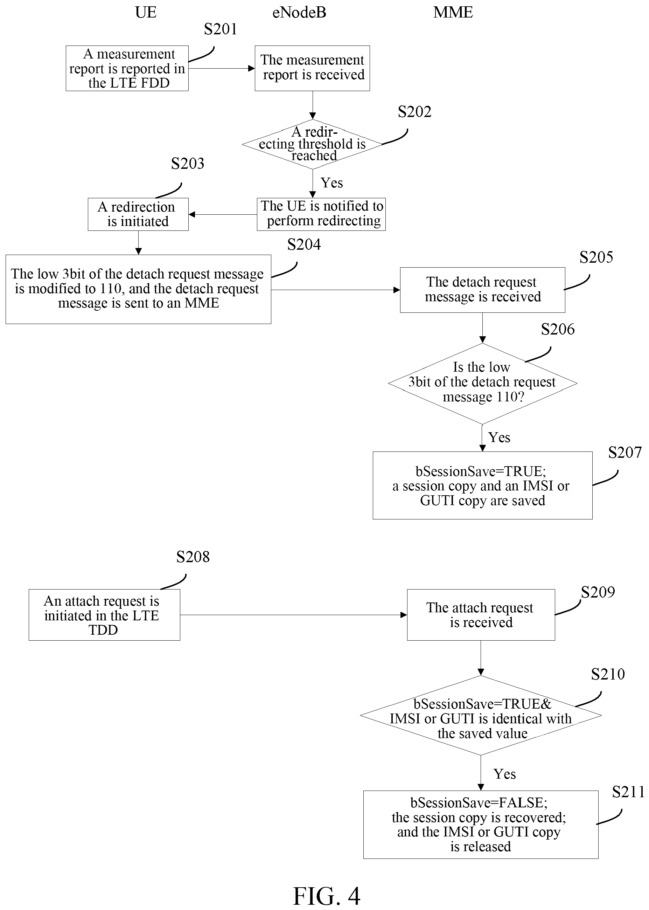

In one application example, the terminal performs handover from the FDD mode to the TDD mode, as shown in FIG. 4, the method for redirecting between the FDD and the TDD includes the following steps:
in step S201, in the FDD-LTE mode, the terminal reports a measurement report to an eNodeB;
in step S202, according to the measurement information, if judging that a redirecting condition is satisfied, the eNodeB notifies the terminal to perform redirecting;
in step S203, the terminal triggers a detach flow in the FDD;
in step S204, the terminal modifies the low 3bit of the Detach request message to 110, and then sends the detach request message to an MME;
the length of the Detach request message is 8bit, and the low 3bit of the Detach request message represents the detach type, herein 001 represents EPS detach, 010 represents IMSI detach, 011 represents combined EPS/IMSI detach, and 110 and 111 are reserved bits, as shown in FIG. 2. 110 is used to represent the detach type caused by redirecting between the FDD and the TDD of the LTE.
in step S205, the MME receives the detach request message;
in step S206, it is to judge whether the low 3bit of the message is 110, if the low 3bit of the message is 110, step S207 is executed;
in step S207, the session maintenance flag bit bSessionSave=TRUE is set, and a session copy and an IMSI or GUTI copy are saved;
in step S208, the terminal initiates the attach request message in the LTE TDD;
in step S209, the MME receives the attach request message;
in step S210, the MME judges whether bSessionSave==TRUE and whether the UE IMSI or GUTI is identical with the saved value, if bSessionSave==TRUE and the UE IMSI or GUTI is identical with the saved value, the step S209 is executed;
in step S211, the session is recovered, bSessionSave=FALSE is set, and the session copy and the IMSI or GUTI copy are released.

In another application example, the flow of the terminal redirecting between the TDD and the FDD is similar to steps S201∼S209, the difference only lies in that, when the terminal performs handover from the TDD mode to the FDD mode, in the TDD-LTE mode, the terminal reports a measurement report to the eNodeB, if a redirecting condition is satisfied, the eNodeB notifies the terminal to trigger a detach flow in the TDD mode, the MME receives a detach request message, and maintains the session; the terminal initiates an attach request message in the LTE TDD; and the MME recovers the session.

As can be seen from the above embodiments, compared with the related art, through the method and device for redirecting between the FDD and the TDD of the LTE system provided in the above embodiments, the problem of service interruption caused by detach when the data terminal redirects from the FDD to the TDD or redirects from the TDD to the FDD in a network covered by both the FDD and the TDD of the LTE system is solved.

The ordinary person skilled in the art can understand that all or part of the steps in the above method can be completed by a program instructing related hardware, and the program can be stored in a computer readable memory medium, such as a read-only memory, magnetic disk or optical disk and so on. Alternatively, all or part of the steps of the above embodiments also can be implemented by using one or multiple integrated circuits. Correspondingly, each module/unit in the above embodiments can be implemented in a form of hardware, and also can be implemented in a form of software function module. The present invention is not limited to any combination of hardware and software in a specific form.

The above description is only the preferred embodiments of the present invention, which is not used to limit the protection scope of the present invention. According to the summary of the present invention, it can still have other various embodiments, the skilled people familiar to the art can make various corresponding changes and transformations according to the present invention without departing from the scope of the appended claims.

### Industrial Applicability

Through the method and device for redirecting between the FDD and the TDD of the LTE system provided in the embodiments of the present invention, the problem of service interruption caused by detach when the data terminal redirects from the FDD to the TDD or redirects from the TDD to the FDD in the network covered by both the FDD and the TDD of the LTE system is solved. Therefore, the present invention has a very strong industrial applicability.

## Claims

1. A method for redirecting between frequency division duplexing, FDD, and time division duplexing, TDD, of an LTE system, comprising:
receiving (S101), by a mobility management entity, MME, a detach request message sent by a terminal in a first system mode, and if judging that the detach request message is used for redirecting between FDD and TDD, setting (S102), by the mobility management entity, MME, a session maintenance identifier as valid for a current session of the terminal, and maintaining (S102) the current session; receiving (S103), by the MME, an attach request message sent by the terminal in a second system mode, according to a unique identifier of the terminal, querying (S104) whether a session maintenance identifier of a session corresponding to the unique identifier is valid, and if the session maintenance identifier is valid, recovering (S104) the session;
wherein, the first system mode is a frequency division duplexing-long term evolution, FDD-LTE, mode, and the second system mode is a time division duplexing-long term revolution, TDD-LTE, mode; or, the first system mode is a TDD-LTE mode, and the second system mode is an FDD-LTE mode.

2. The method for redirecting between FDD and TDD of an LTE system according to claim 1, wherein:
the detach request message carries an identifier used for representing redirecting between the FDD and the TDD;
the MME judges that the detach request message is used for redirecting between the FDD and the TDD according to the identifier used for representing redirecting between the FDD and the TDD.

3. The method for redirecting between FDD and TDD of an LTE system according to claim 1, wherein:
the step of the MME maintaining the current session comprises: establishing and saving a session copy of the current session and a unique identifier copy of the terminal.

4. The method for redirecting between FDD and TDD of an LTE system according to claim 3, wherein:
the step of, according to a unique identifier of the terminal, querying whether a session maintenance identifier of a session corresponding to the unique identifier is valid comprises: judging whether the unique identifier of the terminal is identical with a saved unique identifier copy, if the unique identifier of the terminal is identical with the saved unique identifier copy, querying whether the session maintenance identifier of the session corresponding to the unique identifier of the terminal is valid.

5. The method for redirecting between FDD and TDD of an LTE system according to claim 3, further comprising:
after recovering the session, setting the session maintenance identifier of the session as invalid, and releasing the unique identifier copy of the terminal and a session copy of the session corresponding to the unique identifier.

6. A device for redirecting between frequency division duplexing, FDD, and time division duplexing, TDD, of a long term evolution, LTE, system, comprising a receiving module (301), a session maintenance module (302) and a session recovery module (303), wherein:
the receiving module (301) is configured to: receive a detach request message sent by a terminal in a first system mode, and send the detach request message to the session maintenance module, and receive an attach request message sent by the terminal in a second system mode, and send the attach request message to the session recovery module;
the session maintenance module (302) is configured to: after receiving the detach request message, if judging that the detach request message is used for redirecting between FDD and TDD, set a session maintenance identifier as valid for a current session of the terminal, and maintain the current session;
the session recovery module (303) is configured to: after receiving the attach request message, according to a unique identifier of the terminal, query whether a session maintenance identifier of a session corresponding to the unique identifier is valid, and if the session maintenance identifier is valid, recover the session;
wherein, the first system mode is a frequency division duplexing-long term evolution, FDD-LTE, mode and the second system mode is a time division duplexing-long term evolution, TDD-LTE, mode; or, the first system mode is a TDD-LTE mode, and the second system mode is an FDD-LTE mode.

7. The device for redirecting between FDD and TDD of an LTE system according to claim 6, wherein:
the detach request message carries an identifier used for representing redirecting between the FDD and the TDD;
the session maintenance module is further configured to: judge that the detach request message is used for redirecting between the FDD and the TDD according to the identifier used for representing redirecting between the FDD and the TDD.

8. The device for redirecting between FDD and TDD of an LTE system according to claim 6, wherein, the session maintenance module is configured to maintain the current session by means of:
establishing and saving a session copy of the current session and a unique identifier copy of the terminal.

9. The device for redirecting between FDD and TDD of an LTE system according to claim 8, wherein, the session recovery module is configured to, according to the unique identifier of the terminal, query whether the session maintenance identifier of the session corresponding to the unique identifier is valid by means of:
judging whether the unique identifier of the terminal is identical with a saved unique identifier copy, if the unique identifier of the terminal is identical with the saved unique identifier copy, querying whether the session maintenance identifier of the session corresponding to the unique identifier of the terminal is valid.

10. The device for redirecting between FDD and TDD of an LTE system according to claim 8, wherein:
the session recovery module is further configured to: after recovering the session, set the session maintenance identifier of the session as invalid, and release the unique identifier copy of the terminal and a session copy of the session corresponding to the unique identifier.

## Patentansprüche

1. Verfahren zum Umleiten zwischen Frequenzduplex (FDD) und Zeitduplex (TDD) eines LTE-Systems, das Folgendes umfasst:
Empfangen (S101), durch eine Mobilitätsmanagement-Entität (MME), einer Abkopplungsanforderungsmeldung, die durch ein Endgerät in einem ersten Systemmodus gesendet wird, und wenn beurteilt wird, dass die Abkopplungsanforderungsmeldung zum Umleiten zwischen FDD und TDD verwendet wird, Einstellen (S102), durch die Mobilitätsmanagement-Entität (MME), einen Sitzungsaufrechterhaltungsidentifikator als gültig für eine momentane Sitzung des Endgerätes, und Aufrechterhalten (S102) der momentanen Sitzung;
Empfangen (S103), durch die MME, einer Ankopplungsanforderungsmeldung, die durch das Endgerät in einem zweiten Systemmodus gesendet wird, gemäß einem eindeutigen Identifikator des Endgerätes,
Abfragen (S104), ob ein Sitzungsaufrechterhaltungsidentifikator einer Sitzung, der dem eindeutigen Identifikator entspricht, gültig ist, und wenn der Sitzungsaufrechterhaltungsidentifikator gültig ist, Wiederherstellen (S104) der Sitzung;
wobei der erste Systemmodus ein Frequency Division Duplexing-Long Term Evolution (FDD-LTE)-Modus ist und der zweite Systemmodus ein Time Division Duplexing-Long Term Evolution (TDD-LTE)-Modus ist, oder der erste Systemmodus ein TDD-LTE-Modus ist und der zweite Systemmodus ein FDD-LTE-Modus ist.

2. Verfahren zum Umleiten zwischen FDD und TDD eines LTE-Systems nach Anspruch 1, wobei:
die Abkopplungsanforderungsmeldung einen Identifikator transportiert, der zum Darstellen eines Umleitens zwischen dem FDD und dem TDD verwendet wird; und
die MME beurteilt, dass die Abkopplungsanforderungsmeldung zum Umleiten zwischen dem FDD und dem TDD gemäß dem Identifikator verwendet wird, der zum Darstellen eines Umleitens zwischen dem FDD und dem TDD verwendet wird.

3. Verfahren zum Umleiten zwischen FDD und TDD eines LTE-Systems nach Anspruch 1, wobei:
der Schritt, in dem die MME die momentane Sitzung aufrecht erhält, Folgendes umfasst: Erstellen und Speichern einer Sitzungskopie der momentanen Sitzung und einer Kopie des eindeutigen Identifikators des Endgerätes.

4. Verfahren zum Umleiten zwischen FDD und TDD eines LTE-Systems nach Anspruch 3, wobei:
der Schritt des Abfragen gemäß einem eindeutigen Identifikator des Endgerätes, ob ein Sitzungsaufrechterhaltungsidentifikator einer Sitzung, die dem eindeutigen Identifikator entspricht, gültig ist Folgendes umfasst: Beurteilen, ob der eindeutige Identifikator des Endgerätes mit einer gespeicherten Kopie des eindeutigen Identifikators identisch ist, und wenn der eindeutige Identifikator des Endgerätes mit der gespeicherten Kopie des eindeutigen Identifikators identisch ist, Abfragen, ob der Sitzungsaufrechterhaltungsidentifikator der Sitzung, der dem eindeutigen Identifikator des Endgerätes entspricht, gültig ist.

5. Verfahren zum Umleiten zwischen FDD und TDD eines LTE-Systems nach Anspruch 3, das ferner Folgendes umfasst:
nach dem Wiederherstellen der Sitzung, Einstellen des Sitzungsaufrechterhaltungsidentifikators der Sitzung als ungültig, und Freigeben der Kopie des eindeutigen Identifikators des Endgerätes und einer Sitzungskopie der Sitzung, die dem eindeutigen Identifikator entspricht.

6. Vorrichtung zum Umleiten zwischen Frequenzduplex (FDD) und Zeitduplex (TDD) eines Long Term Evolution (LTE)-Systems, die ein Empfangsmodul (301), ein Sitzungsaufrechterhaltungsmodul (302) und ein Sitzungswiederherstellungsmodul (303) umfasst, wobei:
das Empfangsmodul (301) für Folgendes konfiguriert ist: Empfangen einer Abkopplungsanforderungsmeldung, die durch ein Endgerät in einem ersten Systemmodus gesendet wird, und Senden der Abkopplungsanforderungsmeldung an das Sitzungsaufrechterhaltungsmodul, und Empfangen einer Ankopplungsanforderungsmeldung, die durch das Endgerät in einem zweiten Systemmodus gesendet wird, und Senden der Ankopplungsanforderungsmeldung an das Sitzungswiederherstellungsmodul;
das Sitzungsaufrechterhaltungsmodul (302) für Folgendes konfiguriert ist: nach dem Empfangen der Abkopplungsanforderungsmeldung, wenn beurteilt wird, dass die Abkopplungsanforderungsmeldung zum Umleiten zwischen FDD und TDD verwendet wird, Einstellen eines Sitzungsaufrechterhaltungsidentifikator als gültig für eine momentane Sitzung des Endgerätes, und Aufrechterhalten der momentanen Sitzung;
das Sitzungswiederherstellungsmodul (303) für Folgendes konfiguriert ist: nach dem Empfangen der Ankopplungsanforderungsmeldung gemäß einem eindeutigen Identifikator des Endgerätes, Abfragen, ob ein Sitzungsaufrechterhaltungsidentifikator einer Sitzung, die dem eindeutigen Identifikator entspricht, gültig ist, und wenn der Sitzungsaufrechterhaltungsidentifikator gültig ist, Wiederherstellen der Sitzung;
wobei der erste Systemmodus ein Frequency Division Duplexing-Long Term Evolution (FDD-LTE)-Modus ist und der zweite Systemmodus ein Time Division Duplexing-Long Term Evolution (TDD-LTE)-Modus ist, oder der erste Systemmodus ein TDD-LTE-Modus ist und der zweite Systemmodus ein FDD-LTE-Modus ist.

7. Vorrichtung zum Umleiten zwischen FDD und TDD eines LTE-Systems nach Anspruch 6, wobei:
die Abkopplungsanforderungsmeldung einen Identifikator transportiert, der zum Darstellen des Umleitens zwischen dem FDD und dem TDD verwendet wird; und
das Sitzungsaufrechterhaltungsmodul des Weiteren für Folgendes konfiguriert ist: Beurteilen, dass die Abkopplungsanforderungsmeldung zum Umleiten zwischen dem FDD und dem TDD gemäß dem Identifikator verwendet wird, der für das Darstellen des Umleitens zwischen dem FDD und dem TDD verwendet wird.

8. Vorrichtung zum Umleiten zwischen FDD und TDD eines LTE-Systems nach Anspruch 6, wobei das Sitzungsaufrechterhaltungsmodul dafür konfiguriert ist, die momentane Sitzung aufrecht zu erhalten durch:
Erstellen und Speichern einer Sitzungskopie der momentanen Sitzung und einer Kopie des eindeutigen Identifikators des Endgerätes.

9. Vorrichtung zum Umleiten zwischen FDD und TDD eines LTE-Systems nach Anspruch 8, wobei das Sitzungswiederherstellungsmodul dafür konfiguriert ist, gemäß dem eindeutigen Identifikator des Endgerätes abzufragen, ob der Sitzungsaufrechterhaltungsidentifikator der Sitzung, der dem eindeutigen Identifikator entspricht, gültig ist, durch:
Beurteilen, ob der eindeutige Identifikator des Endgerätes mit einer gespeicherten Kopie des eindeutigen Identifikators identisch ist, und wenn der eindeutige Identifikator des Endgerätes mit der gespeicherten Kopie des eindeutigen Identifikators identisch ist, Abfragen, ob der Sitzungsaufrechterhaltungsidentifikator der Sitzung, der dem eindeutigen Identifikator des Endgerätes entspricht, gültig ist.

10. Vorrichtung zum Umleiten zwischen FDD und TDD eines LTE-Systems nach Anspruch 8, wobei:
das Sitzungswiederherstellungsmodul des Weiteren für Folgendes konfiguriert ist: nach dem Wiederherstellen der Sitzung, Einstellen des Sitzungsaufrechterhaltungsidentifikators der Sitzung als ungültig und Freigeben der Kopie des eindeutigen Identifikators des Endgerätes und einer Sitzungskopie der Sitzung, die dem eindeutigen Identifikator entspricht.

## Revendications

1. Procédé de redirection entre un duplexage par répartition de fréquence, FDD, et un duplexage par répartition dans le temps, TDD, d'un système LTE, comprenant :
la réception (S101), par une entité de gestion de mobilité, MME, d'un message de demande de détachement envoyé par un terminal dans un premier mode de système, et, s'il est jugé que le message de demande de détachement est utilisé pour une redirection entre un FDD et un TDD, le réglage (S102), par l'entité de gestion de mobilité, MME, d'un identifiant de maintien de session en tant que valide pour une session actuelle du terminal, et le maintien (S102) de la session actuelle;
la réception (S103), par la MME, d'un message de demande d'attachement envoyé par le terminal dans un deuxième mode de système, en fonction d'un identifiant unique du terminal, l'interrogation (S104) si un identifiant de maintien de session d'une session correspondant à l'identifiant unique est valide, et, si l'identifiant de maintien de session est valide, la reprise (S104) de la session ;
dans lequel le premier mode de système est un mode d'évolution à long terme à duplexage par répartition de fréquence, FDD-LTE, et le deuxième mode de système est un mode d'évolution à long terme à duplexage par répartition dans le temps, TDD-LTE ; ou le premier mode de système est un mode TDD-LTE et le deuxième mode de système est un mode FDD-LTE.

2. Procédé de redirection entre un FDD et un TDD d'un système LTE selon la revendication 1, dans lequel :
le message de demande de détachement porte un identifiant utilisé pour représenter une redirection entre le FDD et le TDD ;
la MME juge que le message de demande de détachement est utilisé pour une redirection entre le FDD et le TDD en fonction de l'identifiant utilisé pour représenter une redirection entre le FDD et le TDD.

3. Procédé de redirection entre un FDD et un TDD d'un système LTE selon la revendication 1, dans lequel :
l'étape du maintien de la session actuelle par la MME comprend:
l'établissement et l'enregistrement d'une copie de session de la session actuelle et d'une copie d'identifiant unique du terminal.

4. Procédé de redirection entre un FDD et un TDD d'un système LTE selon la revendication 3, dans lequel :
l'étape de, en fonction d'un identifiant unique du terminal,
l'interrogation si un identifiant de maintien de session d'une session correspondant à l'identifiant unique est valide comprend : le jugement si l'identifiant unique du terminal est identique à une copie d'identifiant unique enregistrée et, si l'identifiant unique du terminal est identique à la copie d'identifiant unique enregistrée, l'interrogation si l'identifiant de maintien de session de la session correspondant à l'identifiant unique du terminal est valide.

5. Procédé de redirection entre un FDD et un TDD d'un système LTE selon la revendication 3, comprenant en outre :
après la reprise de la session, le réglage de l'identifiant de maintien de session de la session en tant qu'invalide, et la diffusion de la copie d'identifiant unique du terminal et d'une copie de session de la session correspondant à l'identifiant unique.

6. Dispositif de redirection entre un duplexage par répartition de fréquence, FDD, et un duplexage par répartition dans le temps, TDD, d'un système d'évolution à long terme, LTE, comprenant un module de réception (301), un module de maintien de session (302) et un module de reprise de session (303), dans lequel :
le module de réception (301) est configuré pour effectuer : la réception d'un message de demande de détachement envoyé par un terminal dans un premier mode de système, l'envoi du message de demande de détachement au module de maintien de session, la réception d'un message de demande d'attachement envoyé par le terminal dans un deuxième mode de système, et l'envoi du message de demande d'attachement au module de reprise de session;
le module de maintien de session (302) est configuré pour effectuer: après la réception du message de demande de détachement, s'il est jugé que le message de demande de détachement est utilisé pour une redirection entre un FDD et un TDD, le réglage d'un identifiant de maintien de session en tant que valide pour une session actuelle du terminal, et le maintien de la session actuelle;
le module de reprise de session (303) est configuré pour effectuer: après la réception du message de demande d'attachement, en fonction d'un identifiant unique du terminal, l'interrogation si un identifiant de maintien de session d'une session correspondant à l'identifiant unique est valide, et, si l'identifiant de maintien de session est valide, la reprise de la session ;
dans lequel le premier mode de système est un mode d'évolution à long terme à duplexage par répartition de fréquence, FDD-LTE, et le deuxième mode de système est un mode d'évolution à long terme à duplexage par répartition dans le temps, TDD-LTE ; ou le premier mode de système est un mode TDD-LTE et le deuxième mode de système est un mode FDD-LTE.

7. Dispositif de redirection entre un FDD et un TDD d'un système LTE selon la revendication 6, dans lequel :
le message de demande de détachement porte un identifiant utilisé pour représenter une redirection entre le FDD et le TDD ;
le module de maintien de session est en outre configuré pour : juger que le message de demande de détachement est utilisé pour une redirection entre le FDD et le TDD en fonction de l'identifiant utilisé pour représenter une redirection entre le FDD et le TDD.

8. Dispositif de redirection entre un FDD et un TDD d'un système LTE selon la revendication 6, dans lequel le module de maintien de session est configuré pour effectuer le maintien de la session actuelle par:
l'établissement et l'enregistrement d'une copie de session de la session actuelle et d'une copie d'identifiant unique du terminal.

9. Dispositif de redirection entre un FDD et un TDD d'un système LTE selon la revendication 8, dans lequel le module de reprise de session est configuré pour effectuer, en fonction de l'identifiant unique du terminal, l'interrogation si l'identifiant de maintien de session de la session correspondant à l'identifiant unique est valide par :
le jugement si l'identifiant unique du terminal est identique à une copie d'identifiant unique enregistrée et, si l'identifiant unique du terminal est identique à la copie d'identifiant unique enregistrée, l'interrogation si l'identifiant de maintien de session de la session correspondant à l'identifiant unique du terminal est valide.

10. Dispositif de redirection entre un FDD et un TDD d'un système LTE selon la revendication 8, dans lequel :
le module de reprise de session est en outre configuré pour effectuer : après la reprise de la session, le réglage de l'identifiant de maintien de session de la session en tant qu'invalide, et la diffusion de la copie d'identifiant unique du terminal et d'une copie de session de la session correspondant à l'identifiant unique.
